# FASCICULE DE BREVET EUROPEEN

(11) **EP 3 877 461 B1**
(45) Date de publication et mention de la délivrance du brevet: **04.01.2023**
(21) Numéro de dépôt: 19829666.7
(22) Date de dépôt: 07.11.2019
(51) Int. Cl.: C08L 7/00, C08K 3/00, C08L 9/00

(54) **ELASTOMERE DIENIQUE FONCTIONNEL ET COMPOSITION DE CAOUTCHOUC**
FUNKTIONELLE DIENELASTOMER UND KAUTSCHUKZUSAMMENSETZUNG
FUNCTIONAL DIENE ELASTOMER AND RUBBER COMPOSITION

(30) Priorité: 09.11.2018 FR 1860355
(43) Date de publication de la demande: 15.09.2021
(73) Titulaire: COMPAGNIE GENERALE DES ETABLISSEMENTS MICHELIN, 63000 Clermont-Ferrand (FR)
(72) Inventeur: MORESO, Emma, 63040 CLERMONT-FERRAND Cedex 9 (FR); MAMMERI, Kahina, 63040 CLERMONT-FERRAND Cedex 9 (FR); SALIT, Anne-Frédérique, 63040 CLERMONT-FERRAND Cedex 9 (FR)
(74) Mandataire: Gandon-Pain, Sylvie
(86) Numéro de dépôt international: PCT/FR2019/052647
(87) Numéro de publication internationale: WO 2020/094993

(56) Documents cités:
- WO-A1-2016/162206

## Description

La présente invention concerne des élastomères diéniques fortement saturés susceptibles d'être utilisés dans des compositions de caoutchouc diéniques renforcées destinées à être utilisées en particulier dans un pneumatique.

Les élastomères diéniques sont utilisés de façon connue dans des compositions de caoutchouc pour pneumatique. Ils peuvent être aussi utilisés plus spécifiquement dans des compositions de caoutchouc destinées à former des assemblages de composants caoutchouteux multiples. A ce titre, on peut citer les stratifiés caoutchouteux qui sont formés de couches multiples de compositions de caoutchouc superposées les unes sur les autres. L'assemblage de composants caoutchouteux multiples se fait généralement à l'état cru, ce qui signifie que les compositions de caoutchouc constitutives des composants caoutchouteux sont assemblées avant d'être réticulées. Pour garantir la stabilité dimensionnelle de l'assemblage, notamment en minimisant le fluage des composants caoutchouteux, les compositions de caoutchouc doivent présenter une résistance mécanique à l'état cru élevée.

Les élastomères diéniques fortement saturés comme les copolymères d'éthylène et de 1,3-diène confèrent des propriétés intéressantes aux compositions de caoutchouc les contenant, par exemple celles constitutives de bandes de roulement ou de stratifiés comme cela est décrit par exemple dans les demandes de brevet WO 2014114607 A1 et WO 2016087248 A1.

La Demanderesse a découvert de façon surprenante que les propriétés de résistance mécanique à l'état cru des compositions de caoutchouc contenant des élastomères diéniques fortement saturées pouvaient être encore améliorées, ce qui rend l'utilisation de ces compositions de caoutchouc encore plus avantageuse notamment dans la confection d'assemblage de composants caoutchouteux multiples. Ce but est atteint par l'utilisation d'un élastomère diénique fortement saturé portant des fonctions imidazoles, substituées ou non.

Ainsi, un premier objet de l'invention est un élastomère diénique portant des fonctions imidazoles pendantes selon une teneur molaire d'au plus 4% des unités de répétition constitutives de l'élastomère diénique, lequel élastomère diénique est un copolymère d'éthylène et d'un 1,3-diène comprenant des unités éthylène, les unités éthylène représentant au moins 50% en mole des unités de répétition constitutives de l'élastomère diénique, le 1,3-diène étant le 1,3-butadiène ou l'isoprène.

Un deuxième objet de l'invention est une composition de caoutchouc qui comprend un élastomère diénique conforme à l'invention et une charge renforçante qui contient un noir de carbone, une silice ou un mélange d'un noir de carbone et d'une silice.

L'invention porte aussi sur un pneumatique comportant une composition de caoutchouc conforme à l'invention.

### I. DESCRIPTION DETAILLEE DE L'INVENTION

L'abréviation "pce" signifie parties en poids pour cent parties d'élastomère (du total des élastomères si plusieurs élastomères sont présents).

D'autre part, tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse.

L'élastomère conforme à l'invention est un copolymère d'éthylène et d'un 1,3-diène, le 1,3-diène étant le 1,3-butadiène ou l'isoprène. Il a pour caractéristique essentielle de comprendre au moins 50% en mole des unités éthylène, le pourcentage molaire étant relatif au nombre total des unités de répétition constitutives de l'élastomère diénique. De manière bien connue, les unités éthylène sont de formule -(CH₂-CH₂)-. De préférence, les unités éthylène représentent au moins 65% en mole des unités de répétition constitutives de l'élastomère diénique. De manière encore plus préférentielle, les unités éthylène représentent plus de 70% en mole des unités de répétition constitutives de l'élastomère diénique.

L'élastomère conforme à l'invention a aussi pour autre caractéristique essentielle d'être un élastomère diénique. Par élastomère diénique, on entend un élastomère qui comprend des unités diéniques. Par unité diénique, on entend une unité qui contient une double liaison carbone carbone et qui résulte de l'insertion d'un monomère diène dans la chaîne en croissance de l'élastomère par réaction de polymérisation. En l'espèce, l'élastomère diénique conforme à l'invention contient des unités diéniques résultant de l'insertion du 1,3-butadiène ou de l'isoprène. De manière bien connue, la polymérisation du 1,3-butadiène peut conduire à des unités butadiène-1,2 de formule -(CH₂-CH=CH-CH₂)- ou des unités butadiène-1,4 de formule -(CH₂-CH(CH=CH₂))-. De manière aussi bien connue, la polymérisation de l'isoprène peut conduire à des unités isoprène-1,4 de formule -(CH₂-C(CH₃)=CH-CH₂)- ou des unités isoprène-3,4 de formule -(CH₂-CH(C(CH₃)=CH₂))- ou encore des unités isoprène-1,2 de formule (CH₂-C(CH₃)(CH=CH₂))-. Dans la présente invention, l'élastomère diénique conforme à l'invention contient typiquement comme unités résultant de l'insertion du 1,3-butadiène des unités butadiène-1,4, de préférence trans, ou des unités butadiène-1,2 ou bien comme unités résultant de l'insertion de l'isoprène des unités isoprène-1,4 ou des unités isoprène-3,4. Le 1,3-diène est de préférence le 1,3-butadiène.

Selon un mode de réalisation particulier de l'invention, l'élastomère conforme à l'invention est un copolymère d'éthylène et de 1,3-butadiène qui contient des unités de formule (I) ou (II), de préférence de formule (I). La présence de structure cyclique à 6 membres dans un copolymère d'éthylène et du 1,3-butadiène résulte d'une insertion très particulière des monomères que sont l'éthylène et le 1,3-butadiène, comme cela est par exemple décrit dans le document Macromolecules 2009, 42(11), 3774-3379.

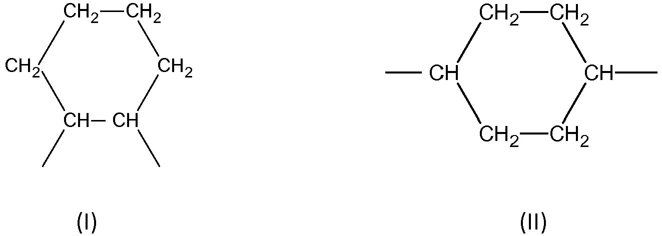

L'élastomère conforme à l'invention, lorsqu'il est un copolymère d'éthylène et de 1,3-butadiène, contient de préférence des unités UA, UB, UC, UD et UE selon les pourcentages molaires respectifs m, n, o, p et q. Les unités UA sont des unités éthylène, les unités UB et UC étant respectivement des unités butadiène-1,4 et des unités butadiène-1,2, les unités UD et UE étant de formule (I) et (II) respectivement. Les unités UA, UB, UC, UD et UE sont distribuées statistiquement au sein de l'élastomère. Les valeurs de m, n, o, p et q sont calculées sur la base de la somme de m + n + o + p + q qui est égale à 100, sachant que :
■ m ≥ 50
■ 0 < o + p ≤ 25
■ n + o >0
■ o + p + q ≥ 10
■ q ≥ 0
■ m, n, o, p et q étant des nombres allant de 0 à 100.

La valeur de m est préférentiellement d'au moins 65, plus préférentiellement supérieur à 70.

Les valeurs de m, n, o, p et q varient plus préférentiellement selon les plages indiquées ci-après :
■ m ≥ 65, de préférence encore m > 70
■ n + o + p + q ≥ 15, de préférence encore 20
■ 10 ≥ p + q ≥ 2
■ 1 ≥ n/(o+p+q)
■ lorsque q est non nul, 20 ≥ p / q ≥ 1

Selon un autre mode de réalisation particulier de l'invention, l'élastomère conforme à l'invention est un copolymère d'éthylène et d'isoprène qui contient des unités isoprène dont au moins 70% sont sous la configuration 3,4. Dans le copolymère d'éthylène et d'isoprène, les unités isoprène représentent préférentiellement au moins 10% en mole des unités de répétition constitutives de l'élastomère diénique, en particulier de 10 à 35% en mole des unités de répétition constitutives de l'élastomère diénique, plus préférentiellement de 10% à moins de 30% en mole des unités de répétition constitutives de l'élastomère diénique.

Selon l'un quelconque des modes de réalisation de l'invention, les unités résultant de la copolymérisation de l'éthylène et du 1,3-diène sont de préférence réparties de façon statistique dans l'élastomère conforme à l'invention.

L'élastomère conforme à l'invention a aussi pour autre particularité de porter des groupes pendants. Les groupes pendants sont des fonctions imidazoles. Les fonctions imidazoles pendantes sont présentes dans l'élastomère diénique selon une teneur molaire d'au plus 4% en mole des unités de répétition constitutives de l'élastomère diénique. De préférence, la teneur molaire des fonctions imidazoles pendantes est au plus de 3% en mole des unités de répétition constitutives de l'élastomère diénique. De préférence, la teneur molaire des fonctions imidazoles pendantes est au moins de 0.05% en mole des unités de répétition constitutives de l'élastomère diénique. De manière plus préférentielle, la teneur molaire des fonctions imidazoles pendantes varie dans un domaine allant de 0.05% à 3% en mole des unités de répétition constitutives de l'élastomère diénique. Ces plages préférentielles de la teneur molaire des fonctions imidazoles pendantes peuvent s'appliquer à l'un quelconque des modes de réalisation de l'invention. Dans la présente demande, les unités de répétition constitutives de l'élastomère diénique sont typiquement les unités résultant de la copolymérisation d'éthylène et du 1,3-diène, y compris les unités modifiées en qu'elles portent une fonction imidazole pendante.

De préférence, les fonctions imidazole pendantes sont de formule (III)

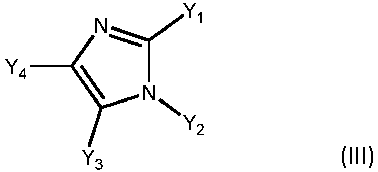

Dans la formule (III), les symboles Y₁, Y₂, Y₃ et Y₄, identiques ou différents, représentent un atome d'hydrogène ou un substituant sachant qu'un des symboles Y₁, Y₂, Y₃ et Y₄ désigne un rattachement à une unité diénique de l'élastomère diénique. De préférence, un seul symbole désigne un rattachement à une unité diénique de l'élastomère. Le rattachement est direct, auquel cas le cycle à 5 membres de la fonction imidazole est lié à l'unité diénique par l'intermédiaire d'une liaison covalente ou bien le rattachement est indirect, auquel cas un groupe relie de façon covalente le cycle à 5 membres de la fonction imidazole à l'unité diénique. Dans la présente demande, on entend par groupe un enchaînement d'atomes liés de façon covalente pour constituer une chaîne.

Lorsque ni Y₃, ni Y₄ ne désignent un rattachement à une unité diénique de l'élastomère, Y₃ et Y₄ peuvent former avec les deux atomes de carbone auxquels ils se rattachent un cycle, en particulier aromatique.

De préférence, le symbole Y₂ désigne le rattachement à une unité diénique de l'élastomère.

De préférence, les symboles Y₃ et Y₄ sont chacun un atome d'hydrogène.

De préférence, le symbole Y₁ représente un atome d'hydrogène ou une chaîne carbonée qui est préférentiellement un groupe alkyle. Dans la présente demande, on entend par chaîne carbonée une chaîne qui contient un ou plusieurs atomes de carbone. Avantageusement, Y₁ est un atome d'hydrogène ou un groupe alkyle. Lorsque le symbole Y₁ représente un groupe alkyle, le groupe alkyle est préférentiellement un groupe alkyle qui contient de 1 à 6 atomes de carbone, plus préférentiellement un méthyle.

Selon un mode de réalisation tout particulièrement préférentiel, le symbole Y₂ désigne le rattachement à une unité diénique de l'élastomère, les symboles Y₃ et Y₄ sont chacun un atome d'hydrogène et le symbole Y₁ représente un atome d'hydrogène ou une chaîne carbonée, préférentiellement un groupe alkyle, plus préférentiellement un groupe alkyle contenant 1 à 6 atomes de carbone, encore plus préférentiellement un méthyle.

Selon l'un quelconque des modes de réalisation de l'invention, les fonctions imidazoles pendantes sont de préférence réparties de façon statistique dans l'élastomère conforme à l'invention.

Selon un mode de réalisation particulier de l'invention, l'élastomère conforme à l'invention peut être un mélange de plusieurs élastomères qui peuvent se différencier les uns des autres par leur microstructure et leur macrostructure, tant que chacun des élastomères est conforme à l'invention.

Selon un mode de réalisation particulièrement préférentiel de l'invention, l'élastomère conforme à l'invention est un élastomère diénique dont une partie des unités diéniques sont modifiées par greffage d'un agent de modification qui contient un groupe réactif vis-à-vis de doubles liaisons carbone carbone et un groupe de formule (IV) dans laquelle les symboles Z₁, Z₂, Z₃ et Z₄ , identiques ou différents, représentent un atome d'hydrogène ou un substituant sachant qu'au moins un des symboles Z₁, Z₂, Z₃ et Z₄ désigne un rattachement au groupe réactif. De préférence, un seul symbole désigne un rattachement au groupe réactif.

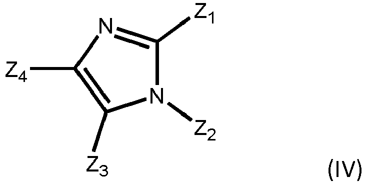

Lorsque ni Z₃, ni Z₄ ne désignent un rattachement au groupe réactif, Z₃ et Z₄ peuvent former avec les deux atomes de carbone auxquels ils se rattachent un cycle, en particulier aromatique. Le rattachement est direct, auquel cas la fonction imidazole est lié au groupe réactif par l'intermédiaire d'une liaison covalente ou bien le rattachement est indirect, auquel cas un groupe relie de façon covalente le cycle à 5 membres de la fonction imidazole au groupe réactif.

Dans la formule (IV), le symbole Z₂ désigne de préférence le rattachement au groupe réactif.

De préférence, les symboles Z₃ et Z₄ représentent chacun un atome d'hydrogène.

De préférence, le symbole Z₁ représente un atome d'hydrogène ou une chaîne carbonée qui est préférentiellement un groupe alkyle. Avantageusement, Z₁ est un atome d'hydrogène ou un groupe alkyle. Lorsque le symbole Z₁ représente un groupe alkyle, le groupe alkyle est préférentiellement un groupe alkyle qui contient de 1 à 6 atomes de carbone, plus préférentiellement un méthyle.

De manière plus préférentielle, le symbole Z₂ désigne le rattachement au groupe réactif, les symboles Z₃ et Z₄ sont chacun un atome d'hydrogène et le symbole Z₁ représente un atome d'hydrogène ou une chaîne carbonée, la chaîne carbonée étant préférentiellement un groupe alkyle, plus préférentiellement un groupe alkyle contenant 1 à 6 atomes de carbone, encore plus préférentiellement un méthyle.

L'élastomère conforme à l'invention est, selon ce mode de réalisation particulièrement préférentiel de l'invention, un élastomère diénique modifié qui est obtenu par modification d'un élastomère diénique de départ par une réaction de greffage de l'agent de modification. L'élastomère diénique de départ est typiquement un copolymère d'éthylène et du 1,3-diène qui peut être obtenu selon les différentes méthodes de synthèse connues, en particulier en présence de système catalytique comprenant un complexe métallocène. On peut citer à ce titre les systèmes catalytiques à base de complexes métallocènes, lesquels systèmes catalytiques sont décrits dans les documents EP 1092 731 A1, EP1 554 321 A1, EP 1 656 400 A1, EP 1 954 705 A1, EP 1957 506 A1, au nom des Demanderesses.

Selon ce mode de réalisation particulièrement préférentiel de l'invention, l'élastomère conforme à l'invention comporte à la fois des unités diéniques et des unités diéniques modifiées par le greffage de l'agent de modification.

De préférence, l'agent de modification est un composé 1,3-dipolaire. Le terme composé 1,3-dipolaire est compris selon la définition donnée par IUPAC. Il a pour caractéristique de comprendre un seul dipôle et le groupe de formule (IV). Le dipôle constitue le groupe réactif de l'agent de modification vis-à-vis de doubles liaisons carbone carbone. Le dipôle réagit typiquement avec les doubles liaisons carbone carbone des unités diéniques. La mise en présence de l'élastomère diénique de départ et de l'agent de modification conduit à la modification d'une partie des unités diéniques de l'élastomère diénique de départ. Le composé 1,3-dipolaire utile aux besoins de l'invention est de préférence un monooxyde de nitrile aromatique. On entend par composé monooxyde de nitrile aromatique un composé aromatique qui contient un seul dipôle oxyde de nitrile et un noyau benzénique, lequel noyau benzénique est substitué par le dipôle oxyde de nitrile, ce qui signifie que l'atome de carbone du dipôle est lié directement par une liaison covalente à un atome de carbone du noyau benzénique. Avantageusement, le noyau benzénique est substitué en ortho du dipôle.

Avantageusement, le composé 1,3-dipolaire contient un motif de formule (V) dans laquelle quatre des six symboles R₁ à R₆, identiques ou différents, sont un atome d'hydrogène ou un substituant, sachant que le cinquième symbole représente un rattachement au groupe de formule (IV) et le sixième symbole un rattachement direct au dipôle.

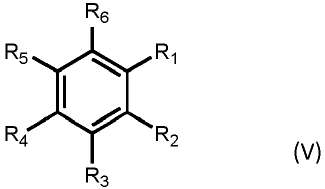

Dans la formule (V), les symboles R₁ et R₅ sont de préférence tous les deux différents d'un atome d'hydrogène, ce qui permet de conférer une plus grande stabilité du composé 1,3-dipolaire et ainsi une utilisation plus aisée du composé 1,3-dipolaire.

Dans la formule (V), les symboles R₁, R₃ et R₅ représentent chacun de préférence un groupe hydrocarboné, de manière plus préférentielle alkyle, de manière encore plus préférentielle méthyle ou éthyle.

Dans la formule (V), les symboles R₂ et R₄ sont préférentiellement chacun un atome d'hydrogène.

Dans la formule (V), les symboles R₁, R₃ et R₅ représentent chacun de préférence un groupe hydrocarboné, de manière plus préférentielle alkyle, de manière encore plus préférentielle méthyle ou éthyle et les symboles R₂ et R₄ sont préférentiellement chacun un atome d'hydrogène. Avec un noyau benzénique ainsi substitué, la synthèse du composé 1,3-dipolaire peut alors être réalisée à partir d'une voie de synthèse relativement aisée à partir d'un précurseur commercialement disponible, par exemple le mésitylène, comme cela est décrit notamment dans le document WO 2015059269.

Dans la formule (V), le cinquième symbole est rattaché au groupe de formule (IV) de préférence par l'intermédiaire d'une chaîne carbonée qui contient préférentiellement 1 à 6 atomes de carbone, plus préférentiellement 1 à 3 atomes de carbone. La chaîne carbonée qui contient préférentiellement 1 à 6 atomes de carbone, plus préférentiellement 1 à 3 atomes de carbone qui permet le rattachement du cinquième symbole au groupe de formule (IV) est avantageusement une chaîne alcanediyle, mieux méthanediyle.

Selon l'un quelconque des modes de réalisation de l'invention, le composé 1,3-dipolaire est avantageusement le composé 2,4,6-triméthyl-3-((2-méthyl-1*H*-imidazol-1-yl)méthyl)benzo-nitrile oxyde de formule (V-a) ou le composé 2,4,6-triéthyl-3-((2-méthyl-1*H*-imidazol-1-yl)méthyl)benzo-nitrile oxyde de formule (V-b), plus avantageusement le composé de formule (V-a) .

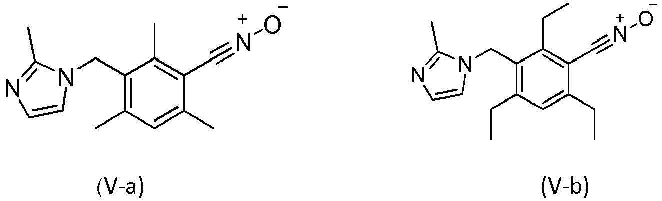

L'élastomère diénique conforme à l'invention peut être utilisé dans une composition de caoutchouc, notamment pour pneumatique.

La composition de caoutchouc qui comprend l'élastomère diénique conforme à l'invention a pour autre caractéristique essentielle de comprendre une charge renforçante.

La composition de caoutchouc contient une charge dite renforçante, connue pour ses capacités à renforcer une composition de caoutchouc utilisable pour la fabrication de pneumatiques, tel qu'un noir de carbone ou une silice à laquelle est associé de manière connue un agent de couplage, ou encore un mélange de ces deux types de charge, les deux types de charge étant en quantité massique égale ou non dans la composition de caoutchouc. Une telle charge renforçante consiste typiquement en des nanoparticules dont la taille moyenne (en masse) est inférieure au micromètre, généralement inférieure à 500 nm, le plus souvent comprise entre 20 et 200 nm, en particulier et plus préférentiellement comprise entre 20 et 150 nm. La charge renforçante peut être utilisée à un taux compris entre 25 et 200 pce. Le taux de la charge renforçante est ajusté par l'homme du métier en fonction de l'application envisagée de la composition de caoutchouc.

Comme noirs de carbone conviennent tous les noirs de carbone, notamment les noirs conventionnellement utilisés dans les pneumatiques (noirs dits de grade pneumatique). Parmi ces derniers, on citera plus particulièrement les noirs de carbone renforçants des séries 100, 200, 300, ou les noirs de série 500, 600 ou 700 (grades ASTM), comme par exemple les noirs N115, N134, N234, N326, N330, N339, N347, N375, N550, N683, N772). Ces noirs de carbone peuvent être utilisés à l'état isolé, tels que disponibles commercialement, ou sous tout autre forme, par exemple comme support de certains des additifs de caoutchouterie utilisés.

La silice utilisée peut être toute silice renforçante connue de l'homme du métier, notamment toute silice précipitée ou pyrogénée présentant une surface BET ainsi qu'une surface spécifique CTAB toutes deux inférieures à 450 m²/g, de préférence de 30 à 400 m²/g, notamment entre 60 et 300 m²/g. A titres de silices précipitées hautement dispersibles (dites "HDS"), on citera par exemple les silices « Ultrasil » 7000 et « Ultrasil » 7005 de la société Evonik, les silices « Zeosil » 1165MP, 1135MP et 1115MP de la société Solvay, la silice « Hi-Sil » EZ150G de la société PPG, les silices « Zeopol » 8715, 8745 et 8755 de la Société Huber, les silices à haute surface spécifique telles que décrites dans la demande WO 03/016387.

Dans le présent exposé, la surface spécifique BET est déterminée de manière connue par adsorption de gaz à l'aide de la méthode de Brunauer-Emmett-Teller décrite dans "The Journal of the American Chemical Society" Vol. 60, page 309, février 1938, plus précisément selon la norme française NF ISO 9277 de décembre 1996 (méthode volumétrique multipoints (5 points) - gaz: azote - dégazage: 1heure à 160°C - domaine de pression relative *p*/*po:* 0.05 à 0.17). La surface spécifique CTAB est la surface externe déterminée selon la norme française NF T 45-007 de novembre 1987 (méthode B).

Pour coupler la silice à l'élastomère diénique, on utilise de manière bien connue un agent de couplage, notamment un silane, (ou agent de liaison) au moins bifonctionnel destiné à assurer une connexion suffisante, de nature chimique et/ou physique, entre la silice (surface de ses particules) et l'élastomère diénique. On utilise en particulier des organosilanes ou des polyorganosiloxanes au moins bifonctionnels. On utilise notamment des silanes polysulfurés, dits "symétriques" ou "asymétriques" selon leur structure particulière, tels que décrits par exemple dans les demandes WO03/002648 (ou US 2005/016651) et WO03/002649 (ou US 2005/016650).

Conviennent en particulier, sans que la définition ci-après soit limitative, des silanes polysulfurés répondant à la formule générale (VI)

Z-A-Sₓ-A-Z (VI)

dans laquelle :
- x est un entier de 2 à 8 (de préférence de 2 à 5) ;
- les symboles A, identiques ou différents, représentent un radical hydrocarboné divalent (de préférence un groupement alkylène en C₁-C₁₈ ou un groupement arylène en C₆-C₁₂, plus particulièrement un alkylène en C₁-C₁₀, notamment en C₁-C₄, en particulier le propylène) ;
- les symboles Z, identiques ou différents, répondent à l'une des trois formules ci-après: 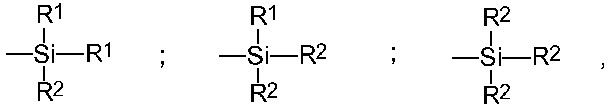 dans lesquelles:
- les radicaux R¹, substitués ou non substitués, identiques ou différents entre eux, représentent un groupe alkyle en C₁-C₁₈, cycloalkyle en C₅-C₁₈ ou aryle en C₆-C₁₈ (de préférence des groupes alkyle en C₁-C₆, cyclohexyle ou phényle, notamment des groupes alkyle en C₁-C₄, plus particulièrement le méthyle et/ou l'éthyle).
- les radicaux R², substitués ou non substitués, identiques ou différents entre eux, représentent un groupe alkoxyle en C₁-C₁₈ ou cycloalkoxyle en C₅-C₁₈ (de préférence un groupe choisi parmi alkoxyles en C₁-C₈ et cycloalkoxyles en C₅-C₈, plus préférentiellement encore un groupe choisi parmi alkoxyles en C₁-C₄, en particulier méthoxyle et éthoxyle).

A titre d'exemples de silanes polysulfurés, on citera plus particulièrement les polysulfures (notamment disulfures, trisulfures ou tétrasulfures) de bis-(alkoxyl(C₁-C₄)-alkyl(C₁-C₄)silyl-alkyl(C₁-C₄)), comme par exemple les polysulfures de bis(3-triméthoxysilylpropyl) ou de bis(3-triéthoxysilylpropyl). Parmi ces composés, on utilise en particulier le tétrasulfure de bis(3-triéthoxysilylpropyl), en abrégé TESPT, de formule [(C₂H₅O)₃Si(CH₂)₃S₂]₂ ou le disulfure de bis-(triéthoxysilylpropyle), en abrégé TESPD, de formule [(C₂H₅O)₃Si(CH₂)₃S]₂.

Le taux d'agent de couplage est ajusté par l'homme du métier selon le taux de silice utilisé dans la composition.

Dans la composition de caoutchouc conforme à l'invention, la charge renforçante comprend un noir de carbone ou une silice ou un mélange d'un noir de carbone et d'une silice.

Selon un mode de réalisation de l'invention, la silice représente plus de 50% en masse de la masse de la charge renforçante de la composition de caoutchouc. Selon ce mode de réalisation, la charge renforçante peut comprendre aussi un noir de carbone, le noir de carbone étant utilisé de préférence à un taux inférieur à 20 pce, plus préférentiellement inférieur à 10 pce (par exemple entre 0.5 et 20 pce, notamment entre 2 et 10 pce). Dans les intervalles indiqués, on bénéficie des propriétés colorantes (agent de pigmentation noire) et anti-UV des noirs de carbone, sans pénaliser par ailleurs les performances typiques apportées par la charge inorganique renforçante.

Selon un autre mode de réalisation de l'invention, le noir de carbone représente plus de 50% en masse de la masse de la charge renforçante de la composition de caoutchouc.

La composition de caoutchouc peut contenir un élastomère autre que celui conforme à l'invention, notamment un élastomère diénique traditionnellement utilisé dans les compositions de caoutchouc. La composition de caoutchouc comprend préférentiellement plus de 50 pce, plus préférentiellement plus de 80 pce de l'élastomère conforme à l'invention défini selon l'un quelconque des modes de réalisation de l'invention.

La composition de caoutchouc peut contenir un système de réticulation en vue de réticuler le ou les élastomères présents dans la composition de caoutchouc. Le système de réticulation peut être un système de vulcanisation ou être à base d'un ou plusieurs composés peroxydes, par exemple conventionnellement utilisés dans les compositions de caoutchouc utilisables pour la fabrication de pneumatique. Le système de réticulation est préférentiellement un système de vulcanisation, c'est-à-dire un système à base de soufre (ou d'un agent donneur de soufre) et d'un accélérateur primaire de vulcanisation. A ce système de vulcanisation de base viennent s'ajouter, incorporés au cours de la première phase non-productive et/ou au cours de la phase productive telles que décrites ultérieurement, divers accélérateurs secondaires ou activateurs de vulcanisation connus tels qu'oxyde de zinc, acide stéarique ou composés équivalents, dérivés guanidiques (en particulier diphénylguanidine), ou encore des retardateurs de vulcanisation connus. Le soufre est utilisé à un taux préférentiel compris entre 0.5 et 12 pce, en particulier entre 0.5 et 10 pce. L'accélérateur primaire de vulcanisation est utilisé à un taux préférentiel compris entre 0.5 et 10 pce, plus préférentiellement compris entre 0.5 et 5.0 pce.

La composition de caoutchouc peut contenir en outre d'autres additifs connus pour être utilisés dans des compositions de caoutchouc pour pneumatiques, tels que des plastifiants, des anti-ozonants, des antioxydants.

La composition de caoutchouc conforme à l'invention est typiquement fabriquée dans des mélangeurs appropriés, en utilisant deux phases de préparation successives bien connues de l'homme du métier : une première phase de travail ou malaxage thermomécanique (phase dite « non-productive ») à haute température, jusqu'à une température maximale comprise entre 130°C et 200°C, suivie d'une seconde phase de travail mécanique (phase dite « productive ») jusqu'à une plus basse température, typiquement inférieure à 110°C, par exemple entre 40°C et 100°C, phase de finition au cours de laquelle est incorporé le système de réticulation.

La composition de caoutchouc conforme à l'invention, pouvant être soit à l'état cru (avant réticulation ou vulcanisation), soit à l'état cuit (après réticulation ou vulcanisation), peut être utilisée dans un article semi-fini pour pneumatique.

Le pneumatique selon l'invention a pour caractéristique essentielle de comprendre une composition de caoutchouc conforme à l'invention.

En résumé, l'invention est mise en oeuvre avantageusement selon l'un quelconque des modes suivants 1 à 35 :
Mode 1 : Elastomère diénique portant des fonctions imidazoles pendantes selon une teneur molaire d'au plus 4% des unités de répétition constitutives de l'élastomère diénique lequel élastomère diénique est un copolymère d'éthylène et d'un 1,3-diène comprenant des unités éthylène, les unités éthylène représentant au moins 50% en mole des unités de répétition constitutives de l'élastomère diénique, le 1,3-diène étant le 1,3-butadiène ou l'isoprène.
Mode 2: Elastomère diénique selon le mode 1 dans lequel les unités éthylène représentent au moins 65% en mole des unités de répétition constitutives de l'élastomère diénique.
Mode 3: Elastomère diénique selon le mode 1 ou 2 dans lequel les unités éthylène représentent plus de 70% en mole des unités de répétition constitutives de l'élastomère diénique.
Mode 4: Elastomère diénique selon l'un quelconque des modes 1 à 3, dans lequel le 1,3-diène est le 1,3-butadiène.
Mode 5 : Elastomère diénique selon l'un quelconque des modes 1 à 4, lequel élastomère diénique est un copolymère d'éthylène et de 1,3-butadiène qui contient des unités de formule (I) ou (II), de préférence de formule (I). 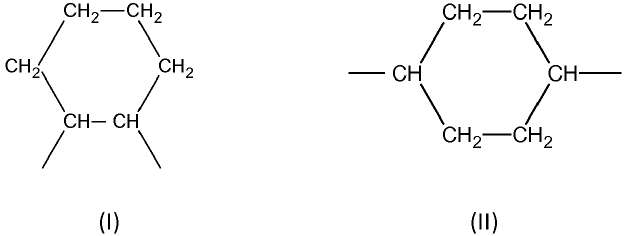
Mode 6: Elastomère diénique selon l'un quelconque des modes 1 à 3, lequel élastomère diénique est un copolymère d'éthylène et d'isoprène qui contient des unités isoprène dont au moins 70% sont sous la configuration 3,4.
Mode 7 : Elastomère diénique selon le mode 6, dans lequel les unités isoprène représentent au moins 10% en mole des unités de répétition constitutives de l'élastomère diénique.
Mode 8 : Elastomère diénique selon l'un quelconque des modes 1 à 7, dans lequel les unités résultant de la copolymérisation de l'éthylène et du 1,3-diène sont de préférence réparties de façon statistique dans l'élastomère conforme à l'invention.
Mode 9 : Elastomère diénique selon l'un quelconque des modes 1 à 8, dans lequel la teneur molaire des fonctions imidazoles pendantes est au plus de 3% des unités de répétition constitutives de l'élastomère diénique.
Mode 10 : Elastomère diénique selon l'un quelconque des modes 1 à 9, dans lequel la teneur molaire des fonctions imidazoles pendantes est au moins de 0.05% en mole des unités de répétition constitutives de l'élastomère diénique.
Mode 11 : Elastomère diénique selon l'un quelconque des modes 1 à 10 dans lequel des fonctions imidazoles pendantes sont de formule (III) 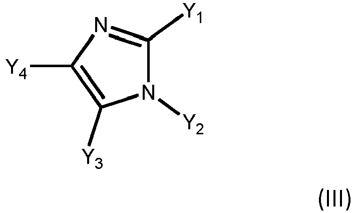 dans laquelle :
   les symboles Y₁, Y₂, Y₃ et Y₄ , identiques ou différents, représentent un atome d'hydrogène ou un substituant sachant qu'un des symboles désigne un rattachement à une unité diénique de l'élastomère diénique.
Mode 12 : Elastomère diénique selon le mode 11 dans lequel Y₂ désigne le rattachement à une unité diénique de l'élastomère diénique.
Mode 13 : Elastomère diénique selon le mode 11 ou 12 dans lequel Y₃ et Y₄ sont chacun un atome d'hydrogène.
Mode 14: Elastomère diénique selon l'un quelconque des modes 11 à 13 dans lequel Y₁ est un atome d'hydrogène ou une chaîne carbonée qui est préférentiellement un groupe alkyle.
Mode 15 : Elastomère diénique selon le mode 14 dans lequel le groupe alkyle représenté par Y₁ contient de 1 à 6 atomes de carbone.
Mode 16: Elastomère diénique selon le mode 14 ou 15 dans lequel le groupe alkyle représenté par Y₁ est un groupe méthyle.
Mode 17 : Elastomère diénique selon l'un quelconque des modes 1 à 16, lequel élastomère diénique est un élastomère diénique dont une partie des unités diéniques sont modifiées par greffage d'un agent de modification qui contient un groupe réactif vis-à-vis de doubles liaisons carbone carbone et un groupe de formule (IV) 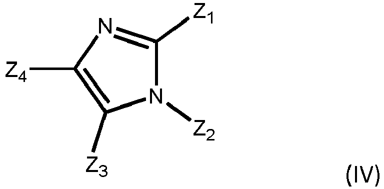 dans laquelle les symboles Z₁, Z₂, Z₃ et Z₄ , identiques ou différents, représentent un atome d'hydrogène ou un substituant sachant qu'au moins un des symboles Z₁, Z₂, Z₃ et Z₄ désigne un rattachement au groupe réactif.
Mode 18 : Elastomère diénique selon le mode 17 dans lequel Z₂ désigne le rattachement au groupe réactif.
Mode 19 : Elastomère diénique selon l'un quelconque des modes 17 à 18 dans lequel Z₃ et Z₄ représentent chacun un atome d'hydrogène.
Mode 20 : Elastomère diénique selon l'un quelconque des modes 17 à 19 dans lequel Z₁ est un atome d'hydrogène ou une chaîne carbonée qui est préférentiellement un groupe alkyle. Mode 21 : Elastomère diénique selon le mode 20 dans lequel le groupe alkyle représenté par Z₁ contient 1 à 6 atomes de carbone.
Mode 22 : Elastomère diénique selon l'un quelconque des modes 20 à 21 dans lequel le groupe alkyle représenté par Z₁ est un groupe méthyle.
Mode 23 : Elastomère diénique selon l'un quelconque des modes 17 à 22 dans lequel l'agent de modification est un composé 1,3-dipolaire.
Mode 24 : Elastomère diénique selon le mode 23 dans lequel le composé 1,3-dipolaire est un monooxyde de nitrile aromatique, composé aromatique qui contient un seul dipôle oxyde de nitrile et un noyau benzénique, lequel noyau benzénique est substitué par le dipôle oxyde de nitrile.
Mode 25 : Elastomère diénique selon le mode 24 dans lequel le noyau benzénique est substitué en ortho du dipôle.
Mode 26 : Elastomère diénique selon l'un quelconque des modes 23 à 25 dans lequel le composé 1,3-dipolaire contient un motif de formule (V) 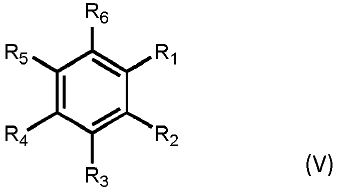 dans laquelle quatre des six symboles R₁ à R₆, identiques ou différents, sont un atome d'hydrogène ou un substituant, sachant que le cinquième symbole représente un rattachement au groupe de formule (IV) et le sixième symbole un rattachement direct au dipôle.
Mode 27 : Elastomère diénique selon le mode 26 dans lequel R₁ et R₅ sont tous les deux différents d'un atome d'hydrogène.
Mode 28 : Elastomère diénique selon l'un quelconque des modes 26 à 27 dans lequel R₁, R₃ et R₅ représentent chacun un groupe hydrocarboné, de préférence alkyle, de manière plus préférentielle méthyle ou éthyle.
Mode 29 : Elastomère diénique selon l'un quelconque des modes 26 à 28 dans lequel R₂ et R₄ sont chacun un atome d'hydrogène.
Mode 30 : Elastomère diénique selon l'un quelconque des modes 26 à 29 dans lequel le cinquième symbole est rattaché au groupe de formule (IV) par l'intermédiaire d'une chaîne carbonée, de préférence une chaîne alcanediyle, de manière plus préférentielle métha nediyle.
Mode 31: Composition de caoutchouc qui comprend un élastomère diénique défini à l'un quelconque des modes 1 à 30 et une charge renforçante qui contient un noir de carbone ou une silice ou un mélange d'un noir de carbone et d'une silice.
Mode 32 : Composition de caoutchouc selon le mode 31 dans laquelle la silice représente plus de 50% en masse de la masse de la charge renforçante.
Mode 33 : Composition de caoutchouc selon le mode 31 dans laquelle le noir de carbone représente plus de 50% en masse de la masse de la charge renforçante.
Mode 34: Composition de caoutchouc selon l'un quelconque des modes 31 à 33, laquelle composition de caoutchouc comprend en outre un système de réticulation, de préférence un système de vulcanisation.
Mode 35 : Pneumatique qui comprend une composition de caoutchouc définie à l'un quelconque des modes 31 à 34.

Les caractéristiques précitées de la présente invention, ainsi que d'autres, seront mieux comprises à la lecture de la description suivante de plusieurs exemples de réalisation de l'invention, donnés à titre illustratif et non limitatif.

### II. EXEMPLES DE REALISATION DE L'INVENTION

### 11.1-Mesure et test utilisés :

### 1) Obtention des courbes force-allongement d'éprouvettes non réticulées

### la) Confection de plaques constituées de compositions de caoutchouc non réticulées :

La composition passe dans une calandre dont les cylindres sont à 75° C de manière à être sous la forme d'une feuille de 2,9 mm d'épaisseur. Cette feuille est moulée sous pression dans un moule pendant 10 minutes à 110° C entre deux feuilles de polyester, puis extraite du moule et enfin refroidie à l'air libre. Une plaque de 2,5 mm d'épaisseur est ainsi obtenue.

### 1b) Conditionnement des plaques obtenues :

Entre le moment de leur confection et celui de l'essai de traction, chaque plaque est stockée sous atmosphère ambiante pour une durée au moins égale à 5 heures et ne pouvant excéder 8 jours.

### 1c) Confection des éprouvettes à partir de ces plaques :

Chaque éprouvette est ensuite immédiatement découpée suivant une forme d'haltère dans l'une des plaques ainsi extraite du moule, de telle sorte qu'elle comporte deux extrémités reliées entre elles par une tige d'épaisseur E = 2,5 mm, de longueur L = 26 mm et de largeur W = 6 mm. La découpe est effectuée de telle manière que la direction longitudinale L de l'éprouvette soit parallèle à la direction du calandrage.

### 1d) Essais de traction :

Au moins trois éprouvettes identiques sont testées dans les mêmes conditions pour chacun des essais de traction réalisés.

Chaque essai de traction consiste à soumettre à une traction à vitesse constante chaque éprouvette et à enregistrer l'évolution de la force de traction en fonction du déplacement d'un mors mobile d'une machine de traction de dénomination « INSTRON 4501 ». Cette machine est équipée d'un capteur de force et d'un moyen pour mesurer le déplacement de ce mors mobile. Chaque éprouvette est maintenue dans sa partie la plus large sous une pression de serrage P égale à 2 bars.

Chaque essai de traction est réalisé à température ambiante, dans un laboratoire climatisé à 23°C (+/-2°C) et à 50% (+/-10%) d'humidité. La vitesse de déplacement constante du mors mobile est de 100 mm/minute. Les variations de la force de traction et du déplacement du mors mobile sont enregistrées durant chaque essai.

Pour chaque éprouvette, les paramètres suivants sont calculés :
- Déformation relative α (%) = 100 × D / L (D est le déplacement du mors mobile en mm), mesuré par le capteur de la machine au cours de chaque essai et L = 26 mm est la longueur initiale de l'éprouvette imposée par « l'emporte-pièce » ), et
- Contrainte apparente F/S₀ (MPa), qui représente le rapport de la force (en N) mesurée par le capteur de la machine, sur la section initiale S₀ de l'éprouvette (S₀ = W. E en mm², W = 6 mm étant la largeur imposée par « l'emporte-pièce » et E = 2,5 mm l'épaisseur de l'éprouvette avant la traction).

Pour chaque niveau de déformation relative, on a calculé la moyenne des contraintes correspondantes pour trois éprouvettes identiques, et l'on a tracé ainsi, pour chacune des éprouvettes testées, un graphe contrainte (moyenne sur trois mesures) - déformation. Les résultats sont donnés en base 100 par rapport à un témoin. Une valeur supérieure à 100 indique une valeur supérieure à celle du témoin.

### 2) Détermination de la microstructure et du taux de fonction des élastomères par résonance magnétique nucléaire (RMN) :

La microstructure est déterminée par RMN ¹H. Le taux molaire de composé oxyde de nitrile greffé est déterminé aussi par analyse RMN. Les échantillons sont solubilisés dans le tétrahydrofurane deutéré THF dans le but d'obtenir un signal de « lock ». Les spectres sont acquis sur un spectromètre 500 MHz BRUKER équipé d'une « CryoSonde BBFO-zgrad-5 mm ». L'expérience RMN ¹H quantitative, utilise une séquence simple impulsion 30° et un délai de répétition de 5 secondes entre chaque acquisition. Des expériences RMN 2D ont permis de vérifier la nature du motif greffé grâce aux déplacements chimiques des atomes de carbone et de proton.

### ll.2-Préparation des élastomères :

Six élastomères E1, E2, E3, E4, E5, et E6 sont préparés comme indiqué ci-après.

L'élastomère E1 est un élastomère diénique qui est un copolymère d'éthylène et de 1,3-butadiène dans lequel les unités éthylène et les unités cycliques de formule (I) représentent respectivement 79.3% et 7% en mole des unités de répétition constitutives du copolymère. Les unités butadiène sont sous forme 1.2 et 1.4 respectivement dans des taux de 63% et 37%. L'élastomère diénique E1 est dépourvu de fonction imidazole. Il est non conforme à l'invention. Il est préparé en présence d'un système catalytique à base d'un métallocène [Me₂Si(Flu)₂Nd(µ-BH₄)₂Li(THF)] et d'un co-catalyseur, le butyloctylmagnésium, selon le mode opératoire suivant :
Dans un réacteur contenant du méthylcyclohexane, on ajoute le co-catalyseur (0.36 mmol/L), puis le métallocène (0.07 mol/L). La durée d'alkylation est de 10 minutes, la température de réaction est de 20 °C. Ensuite, l'éthylène et le 1,3-butadiène sont ajoutés de manière continue dans les quantités molaires respectives de 80% et 20% dans le réacteur. La polymérisation est conduite à 80°C sous une pression de 8 bars. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

Les élastomères E2, E3 et E4 sont préparés par greffage du composé 1,3-dipolaire 2,4,6-triméthyl-3-((2-méthyl-1*H*-imidazol-1-yl)méthyl)benzo-nitrile oxyde de formule sur l'élastomère E1, selon le mode opératoire suivant : dans un mélangeur interne, on malaxe pendant 2 minutes à 110°C l'élastomère diénique E1 avec le composé 1,3-dipolaire selon les taux suivants : 2.16 pce pour l'élastomère E2 (ce qui correspond à un taux molaire de greffage, déterminé par RMN ¹H, de 0.2 mole d'agent de modification greffé pour 100 moles d'unité monomère de polymère E2), 16.16 pce pour l'élastomère E3 (ce qui correspond à un taux molaire de greffage, déterminé par RMN ¹H, de 1.5 mole d'agent de modification greffé pour 100 moles d'unité monomère de polymère E3)et 14.47 pce pour l'élastomère E4 (ce qui correspond à un taux molaire de greffage, déterminé par RMN ¹H, de 1.2 mole d'agent de modification greffé pour 100 moles d'unité monomère de polymère E4). Les élastomères E2, E3 et E4 sont conformes à l'invention.

L'élastomère E5 est un élastomère diénique qui est un copolymère d'éthylène et d'isoprène qui contient 73.3% en mole des unités de répétition constitutives du copolymère d'éthylène et 26.7% en mole des unités de répétition constitutives du copolymère d'isoprène. L'isoprène est présent sous forme 3.4, 1.2 et 1.4 dans les proportions suivantes : 75% sous forme 3.4, 2% sous forme 1.2 et 23 % sous forme 1.4.

L'élastomère E5 est dépourvu de fonction imidazole. Il est non conforme à l'invention. Il est préparé en présence d'un système catalytique à base d'un métallocène [Me₂Si(Flu)₂Nd(µ-BH₄)₂Li(THF)] et d'un co-catalyseur, le butyloctylmagnésium, selon le mode opératoire suivant :
Dans un réacteur contenant du méthylcyclohexane, on ajoute le co-catalyseur (0.18 mmol/L), puis le métallocène (0.06 mol/L). La durée d'alkylation est de 10 minutes, la température de réaction est de 20 °C. Ensuite, l'éthylène et l'isoprène sont ajoutés de manière continue dans les quantités molaires respectives de 65% et 35% dans le réacteur. La polymérisation est conduite à 80°C sous une pression de 8 bars. La réaction de polymérisation est stoppée par refroidissement, dégazage du réacteur et ajout d'éthanol. Un anti-oxydant est ajouté à la solution de polymère. Le copolymère est récupéré par séchage en étuve sous vide jusqu'à masse constante.

L'élastomère E6 est préparé par greffage du composé 1,3-dipolaire 2,4,6-triméthyl-3-((2-méthyl-1*H*-imidazol-1-yl)méthyl)benzo-nitrile oxyde de formule sur l'élastomère E5, selon le mode opératoire suivant : dans un mélangeur interne, on malaxe pendant 2 minutes à 110°C l'élastomère diénique E5 avec le composé 1,3-dipolaire selon un taux de 13.98 pce (ce qui correspond à un taux molaire de greffage, déterminé par RMN ¹H, de 1.7 mole d'agent de modification greffé pour 100 moles d'unité monomère de polymère E6). L'élastomère E6 est conforme à l'invention.

### ll.3-Préparation des compositions de caoutchouc :

Sept compositions de caoutchouc C1 à C7 sont préparées. Leur formulation est donnée dans le tableau 1.

Pour la fabrication des compositions de caoutchouc, on procède de la manière suivante : on introduit dans un mélangeur interne (taux de remplissage final : environ 70% en volume), dont la température initiale de cuve est d'environ 110°C, l'élastomère diénique, puis la charge renforçante, ainsi que les divers autres ingrédients à l'exception du système de vulcanisation. On conduit alors un travail thermomécanique (phase non-productive) en une étape, qui dure environ 5 min à 6 minutes, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 25°C, en mélangeant le tout (phase productive) pendant un temps approprié (par exemple entre 5 et 12 min).

Les compositions ainsi obtenues sont ensuite calandrées sous forme de plaques (d'une épaisseur allant de 2 à 3 mm) ou fines feuilles de caoutchouc, pour la mesure de leurs propriétés physiques ou mécaniques.

Les compositions de caoutchouc C2, C3, C5 et C7 sont des compositions de caoutchouc conformes à l'invention, puisqu'elles contiennent un élastomère diénique conforme à l'invention, respectivement les élastomères E2, E3, E4 et E6.

Les compositions de caoutchouc C1 et C4 qui comprennent une charge renforçante, respectivement une silice et un noir de carbone, sont des compositions de caoutchouc témoin, car elles contiennent l'élastomère E1, un copolymère d'éthylène et de 1,3-butadiène dépourvu de fonction imidazole. La composition de caoutchouc C6 qui contient l'élastomère diénique E5 est aussi une composition de caoutchouc témoin dans le cas des copolymères d'éthylène et d'isoprène.

### ll.4-Résultats :

Les valeurs des déformations et des contraintes à la rupture des compositions sont résumées dans le tableau 2.

Dans le cas d'un copolymère d'éthylène et de 1,3-butadiène, le renforcement à cru des compositions de caoutchouc est très fortement amélioré pour les compositions C2 et C3 comparativement à la composition C1 témoin et pour la composition C5 comparativement à la composition C4 témoin. En effet, les valeurs des contraintes à la rupture des compositions de caoutchouc avant leur réticulation sont très fortement élevées comparativement à leur témoin respectif.

Dans le cas d'un copolymère d'éthylène et d'isoprène, le renforcement à cru de la composition de C7 est aussi amélioré comparativement à la composition témoin C6.

De façon surprenante, on observe que la présence de fonctions imidazoles pendantes sur l'élastomère diénique, qu'il soit un copolymère d'éthylène et de 1,3-butadiène ou un copolymère d'éthylène et d'isoprène permet d'améliorer les propriétés mécaniques à cru des compositions de caoutchouc renforcées d'une silice ou d'un noir de carbone, comme le renforcement à cru. Cette augmentation du renforcement à cru des compositions de caoutchouc conformes à l'invention, rend l'utilisation des élastomères et des compositions conformes à l'invention avantageuse dans la confection d'assemblage de composants caoutchouteux multiples.

**Tableau 1**

| Composition | C1 | C2 | C3 | C4 | C5 | C6 | C7 |
|---|---|---|---|---|---|---|---|
| E1 | 100 | | | 100 | | | |
| E2 | | 100 | | | | | |
| E3 | | | 100 | | | | |
| E4 | | | | | 100 | | |
| E5 | | | | | | 100 | |
| E6 | | | | | | | 100 |
| Noir de carbone (1) | | | | 40 | 40 | | |
| Silice (2) | 60 | 60 | 60 | | | 60 | 60 |
| Silane (3) | 4.8 | 4.8 | 4.8 | | | 4.8 | 4.8 |
| Antioxydant (4) | 2 | 2 | 2 | 2 | 2 | 2 | 2 |
| Acide stéarique (5) | 2.5 | 2.5 | 2.5 | 1.5 | 1.5 | 2.5 | 2.5 |
| Cire paraffine | | | | 1 | 1 | | |
| ZnO (6) | 2 | 2 | 2 | 2.5 | 2.5 | 2 | 2 |
| S | 1 | 1 | 1 | 0.56 | 0.56 | 1 | 1 |
| CBS (7) | 2 | 2 | 2 | 1.26 | 1.26 | 2 | 2 |

| | | | | | | | |
|---|---|---|---|---|---|---|---|
| (1) N234 (2) Silice 160MP (3) TESPT ("Si69" société Degussa) (4) N-1,3-diméthylbutyl-N-phényl-para-phenyldiamine (« Santoflex 6-PPD » de la société Flexsys) (5) Stéarine « Pristerene 4931 » de la société Uniquema (6) Oxyde de Zinc de grade industriel de la société Umicore (7) N-cyclohexyl-2-benzothiazyl-sulfénamide de la société Flexsys. | | | | | | | |

**Tableau 2**

| | | | | | | | |
|---|---|---|---|---|---|---|---|
| Propriétés à cru à 23°C | C1 | C2 | C3 | C4 | C5 | C6 | C7 |
| Allongement rupture (%) | 100 | 182 | 360 | 100 | 713 | 100 | 118 |
| Contrainte rupture (MPa) | 100 | 253 | >1000 | 100 | 860 | 100 | 500 |

## Revendications

1. Elastomère diénique portant des fonctions imidazoles pendantes selon une teneur molaire d'au plus 4% des unités de répétition constitutives de l'élastomère diénique lequel élastomère diénique est un copolymère d'éthylène et d'un 1,3-diène comprenant des unités éthylène, les unités éthylène représentant au moins 50% en mole des unités de répétition constitutives de l'élastomère diénique, le 1,3-diène étant le 1,3-butadiène ou l'isoprène.

2. Elastomère diénique selon la revendication 1 dans lequel les unités éthylène représentent au moins 65% en mole des unités de répétition constitutives de l'élastomère diénique, de préférence plus de 70% en mole des unités de répétition constitutives de l'élastomère diénique.

3. Elastomère diénique selon l'une quelconque des revendications 1 à 2, lequel élastomère diénique est un copolymère d'éthylène et de 1,3-butadiène qui contient des unités de formule (I) ou (II), de préférence de formule (I).

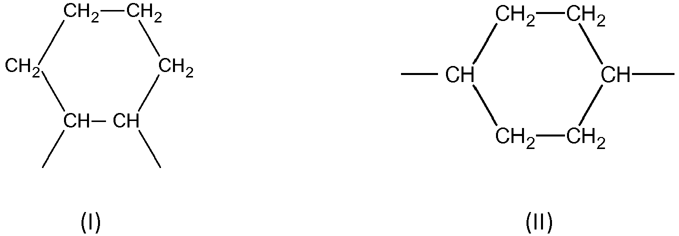

4. Elastomère diénique selon l'une quelconque des revendications 1 à 2, lequel élastomère diénique est un copolymère d'éthylène et d'isoprène qui contient des unités isoprène dont au moins 70% sont sous la configuration 3,4.

5. Elastomère diénique selon l'une quelconque des revendications 1 à 4 dans lequel les fonctions imidazoles pendantes sont de formule (III) 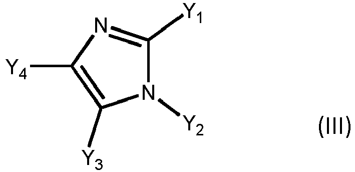 dans laquelle :
les symboles Y₁, Y₂, Y₃ et Y₄ , identiques ou différents, représentent un atome d'hydrogène ou un substituant,
sachant qu'un des symboles, de préférence le symbole Y₂, désigne un rattachement à une unité diénique de l'élastomère diénique.

6. Elastomère diénique selon la revendication 5 dans lequel Y₃ et Y₄ sont chacun un atome d'hydrogène, Y₁ est un atome d'hydrogène ou une chaîne carbonée, préférentiellement un groupe alkyle, plus préférentiellement un groupe alkyle contenant 1 à 6 atomes de carbone, encore plus préférentiellement méthyle.

7. Elastomère diénique selon l'une quelconque des revendications 1 à 6, lequel élastomère diénique est un élastomère diénique dont une partie des unités diéniques sont modifiées par greffage d'un agent de modification qui contient un groupe réactif vis-à-vis de doubles liaisons carbone carbone et un groupe de formule (IV) 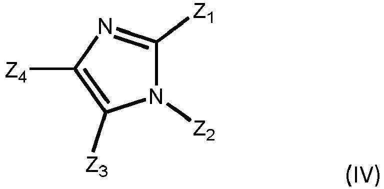
dans laquelle les symboles Z₁, Z₂, Z₃ et Z₄ , identiques ou différents, représentent un atome d'hydrogène ou un substituant,
sachant qu'au moins un des symboles Z₁, Z₂, Z₃ et Z₄ , de préférence Z₂ , désigne un rattachement au groupe réactif.

8. Elastomère diénique selon la revendication 7 dans lequel Z₃ et Z₄ représentent chacun un atome d'hydrogène et Z₁ est un atome d'hydrogène ou une chaîne carbonée qui est préférentiellement un groupe alkyle, plus préférentiellement un groupe alkyle contenant 1 à 6 atomes de carbone, encore plus préférentiellement méthyle.

9. Elastomère diénique selon l'une quelconque des revendications 7 à 8 dans lequel l'agent de modification est un composé 1,3-dipolaire, de préférence un monooxyde de nitrile aromatique, composé aromatique qui contient un seul dipôle oxyde de nitrile et un noyau benzénique, lequel noyau benzénique est substitué par le dipôle oxyde de nitrile.

10. Elastomère diénique selon la revendication 9 dans lequel le noyau benzénique est substitué en ortho du dipôle.

11. Elastomère diénique selon l'une quelconque des revendications 9 à 10 dans lequel le composé 1,3-dipolaire contient un motif de formule (V) 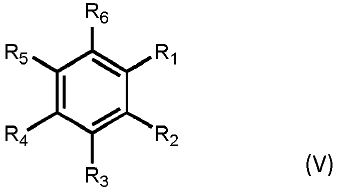 dans laquelle quatre des six symboles R₁ à R₆, identiques ou différents, sont un atome d'hydrogène ou un substituant, sachant que le cinquième symbole représente un rattachement au groupe de formule (IV) et le sixième symbole un rattachement direct au dipôle.

12. Elastomère diénique selon la revendication 11 dans lequel R₁, R₃ et R₅ représentent chacun un groupe hydrocarboné, de préférence alkyle, de manière plus préférentielle méthyle ou éthyle.

13. Elastomère diénique selon l'une quelconque des revendications 11 à 12 dans lequel le cinquième symbole est rattaché au groupe de formule (IV) par l'intermédiaire d'une chaîne carbonée, de préférence une chaîne alcanediyle, de manière plus préférentielle méthanediyle.

14. Composition de caoutchouc qui comprend un élastomère diénique défini à l'une quelconque des revendications 1 à 13 et une charge renforçante qui comprend un noir de carbone, une silice ou un mélange d'un noir de carbone et d'une silice.

15. Pneumatique qui comprend une composition de caoutchouc définie à la revendication 14.

## Patentansprüche

1. Dienelastomer, das seitenständige Imidazolfunktionen gemäß einem molaren Gehalt von mehr als 4 % der Wiederholungseinheiten, aus denen das Dienelastomer aufgebaut ist, trägt, wobei es sich bei dem Dienelastomer um ein Copolymer von Ethylen und einem 1,3-Dien, das Ethyleneinheiten umfasst, handelt, wobei die Ethyleneinheiten mindestens 50 Mol-% der Wiederholungseinheiten, aus denen das Dienelastomer aufgebaut ist, ausmachen, wobei es sich bei dem 1,3-Dien um 1,3-Butadien oder Isopren handelt.

2. Dienelastomer nach Anspruch 1, wobei die Ethyleneinheiten mindestens 65 Mol-% der Wiederholungseinheiten, aus denen das Dienelastomer aufgebaut ist, und vorzugsweise mehr als 70 Mol-% der Wiederholungseinheiten, aus denen das Dienelastomer aufgebaut ist, ausmachen.

3. Dienelastomer nach einem der Ansprüche 1 bis 2, wobei es sich bei dem Dienelastomer um ein Copolymer von Ethylen und 1,3-Butadien handelt, das Einheiten der Formel (I) oder (II), vorzugsweise der Formel (I), enthält.

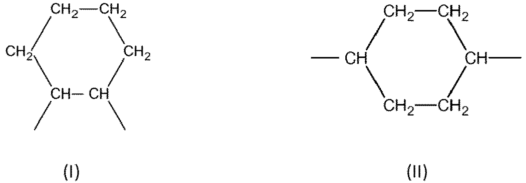

4. Dienelastomer nach einem der Ansprüche 1 bis 2, wobei es sich bei dem Dienelastomer um ein Copolymer von Ethylen und Isopren handelt, das Isopreneinheiten umfasst, von denen mindestens 70 % in 3,4-Konfiguration vorliegen.

5. Dienelastomer nach einem der Ansprüche 1 bis 4, wobei die seitenständigen Imidazolfunktionen die Formel (III) aufweisen: 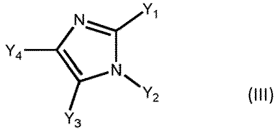 wobei:
die Symbole Y₁, Y₂, Y₃ und Y₄ gleich oder verschieden sind und für ein Wasserstoffatom oder einen Substituenten stehen,
mit der Maßgabe, dass eines der Symbole, vorzugsweise das Symbol Y₂, eine Bindung an eine Dieneinheit des Dienelastomers bezeichnet.

6. Dienelastomer nach Anspruch 5, wobei Y₃ und Y₄ jeweils für ein Wasserstoffatom stehen und Y₁ für ein Wasserstoffatom oder eine Kohlenstoffkette, bevorzugt eine Alkylgruppe, weiter bevorzugt eine Alkylgruppe mit 1 bis 6 Kohlenstoffatomen, noch weiter bevorzugt Methyl, steht.

7. Dienelastomer nach einem der Ansprüche 1 bis 6, wobei es sich bei dem Dienelastomer um ein Dienelastomer handelt, bei dem ein Teil der Dieneinheiten durch Aufpfropfen eines Modifizierungsmittels, dass eine gegenüber Kohlenstoff-Kohlenstoff-Doppelbindungen reaktive Gruppe und eine Gruppe der Formel (IV) enthält, modifiziert ist: 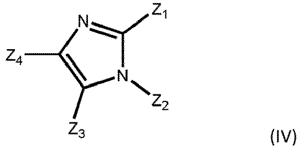 wobei:
die Symbole Z₁, Z₂, Z₃ und Z₄ gleich oder verschieden sind und für ein Wasserstoffatom oder einen Substituenten stehen,
mit der Maßgabe, dass eines der Symbole Z₁, Z₂, Z₃ und Z₄, vorzugsweise Z₂, eine Bindung an die reaktive Gruppe bezeichnet.

8. Dienelastomer nach Anspruch 7, wobei Z₃ und Z₄ jeweils für ein Wasserstoffatom stehen und Z₁ für ein Wasserstoffatom oder eine Kohlenstoffkette, bevorzugt eine Alkylgruppe, weiter bevorzugt eine Alkylgruppe mit 1 bis 6 Kohlenstoffatomen, noch weiter bevorzugt Methyl, steht.

9. Dienelastomer nach einem der Ansprüche 7 bis 8, wobei es sich bei dem Modifizierungsmittel um eine 1,3-dipolare Verbindung, vorzugsweise ein aromatisches Nitrilmonooxid, handelt, bei welchem es sich um eine aromatische Verbindung handelt, die einen einzigen Nitriloxid-Dipol und einen Benzolkern umfasst, wobei der Benzolkern durch den Nitriloxid-Dipol substituiert ist.

10. Dienelastomer nach Anspruch 9, wobei der Benzolkern in ortho-Position zum Dipol substituiert ist.

11. Dienelastomer nach einem der Ansprüche 9 bis 10, wobei die 1,3-dipolare Verbindung eine Einheit der Formel (V) umfasst: 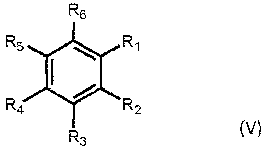 wobei die sechs Symbole R₁ bis R₆ gleich oder verschieden sind und für ein Wasserstoffatom oder einen Substituenten stehen, mit der Maßgabe, dass das fünfte Symbol für eine Bindung an die Gruppe der Formel (IV) steht und das sechste Symbol für eine direkte Bindung an den Dipol steht.

12. Dienelastomer nach Anspruch 11, wobei R₁, R₃ und R₅ jeweils für eine Kohlenwasserstoffgruppe, bevorzugt eine Alkylgruppe, weiter bevorzugt eine Methyl- oder Ethylgruppe, stehen.

13. Dienelastomer nach einem der Ansprüche 11 bis 12, wobei das fünfte Symbol über eine Kohlenstoffkette, bevorzugt eine Alkandiylkette, weiter bevorzugt Methandiyl, an die Gruppe der Formel (IV) gebunden ist.

14. Kautschukzusammensetzung, die ein Dienelastomer gemäß einem der Ansprüche 1 bis 13 und einen verstärkenden Füllstoff, der einen Ruß, eine Kieselsäure oder eine Mischung eines Rußes und einer Kieselsäure umfasst, umfasst.

15. Reifen, der eine Kautschukzusammensetzung gemäß Anspruch 14 umfasst.

## Claims

1. Diene elastomer bearing pendent imidazole functions in a molar content of at most 4% of the constituent repeating units of the diene elastomer, which diene elastomer is a copolymer of ethylene and of a 1,3-diene comprising ethylene units, the ethylene units representing at least 50 mol% of the constituent repeating units of the diene elastomer, the 1,3-diene being 1,3-butadiene or isoprene.

2. Diene elastomer according to Claim 1, in which the ethylene units represent at least 65 mol% of the constituent repeating units of the diene elastomer, preferably more than 70 mol% of the constituent repeating units of the diene elastomer.

3. Diene elastomer according to either one of Claims 1 and 2, which diene elastomer is a copolymer of ethylene and of 1,3-butadiene which contains units of formula (I) or (II), preferably of formula (I) .

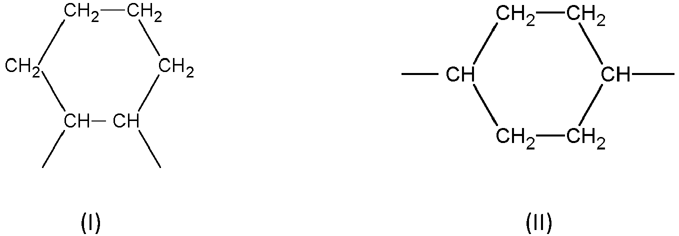

4. Diene elastomer according to either one of Claims 1 and 2, which diene elastomer is a copolymer of ethylene and of isoprene which contains isoprene units of which at least 70% are in the 3,4 configuration.

5. Diene elastomer according to any one of Claims 1 to 4, in which the pendent imidazole functions are of formula (III) 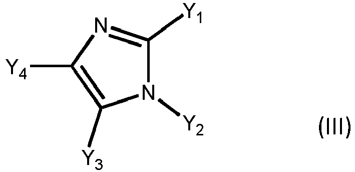 in which:
the symbols Y₁, Y₂, Y₃ and Y₄, which may be identical or different, represent a hydrogen atom or a substituent,
knowing that one of the symbols, preferably the symbol Y₂, denotes an attachment to a diene unit of the diene elastomer.

6. Diene elastomer according to Claim 5, in which Y₃ and Y₄ are each a hydrogen atom, and Y₁ is a hydrogen atom or a carbon chain, preferentially an alkyl group, more preferentially an alkyl group containing 1 to 6 carbon atoms, even more preferentially a methyl group.

7. Diene elastomer according to any one of Claims 1 to 6, which diene elastomer is a diene elastomer, a portion of the diene units of which are modified by grafting a modifying agent which contains a group that is reactive with respect to carbon-carbon double bonds and a group of formula (IV) 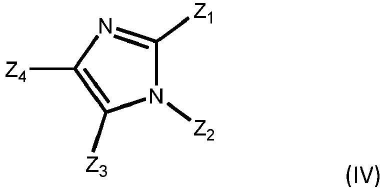
in which the symbols Z₁, Z₂, Z₃ and Z₄, which may be identical or different, represent a hydrogen atom or a substituent,
knowing that at least one of the symbols Z₁, Z₂, Z₃ and Z₄, preferably Z₂, denotes an attachment to the reactive group.

8. Diene elastomer according to Claim 7, in which Z₃ and Z₄ each represent a hydrogen atom, and Z₁ is a hydrogen atom or a carbon chain which is preferentially an alkyl group, more preferentially an alkyl group containing 1 to 6 carbon atoms, even more preferentially a methyl group.

9. Diene elastomer according to either one of Claims 7 and 8, in which the modifying agent is a 1,3-dipolar compound, preferably an aromatic nitrile monoxide, which aromatic compound contains a single nitrile oxide dipole and a benzene ring, which benzene ring is substituted by the nitrile oxide dipole.

10. Diene elastomer according to Claim 9, in which the benzene ring is substituted in the position ortho to the dipole.

11. Diene elastomer according to either one of Claims 9 and 10, in which the 1,3-dipolar compound contains a unit of formula (V) 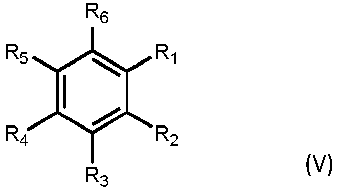 in which four of the six symbols R₁ to R₆, which may be identical or different, are a hydrogen atom or a substituent, knowing that the fifth symbol represents an attachment to the group of formula (IV) and the sixth symbol a direct attachment to the dipole.

12. Diene elastomer according to Claim 11, in which R₁, R₃ and R₅ each represent a hydrocarbon-based group, preferably an alkyl group, more preferentially a methyl or ethyl group.

13. Diene elastomer according to either one of Claims 11 and 12, in which the fifth symbol is attached to the group of formula (IV) via a carbon chain, preferably an alkanediyl chain, more preferentially a methanediyl chain.

14. Rubber composition which comprises a diene elastomer defined in any one of Claims 1 to 13 and a reinforcing filler which comprises a carbon black, a silica or a mixture of a carbon black and a silica.

15. Tyre which comprises a rubber composition defined in Claim 14.
